(19) Europäisches Patentamt

European Patent Office

Office européen des brevets

(11) **EP 1 024 162 B1**

(12) **EUROPEAN PATENT SPECIFICATION**

(45) Date of publication and mention
of the grant of the patent:
**15.12.2004 Bulletin 2004/51**

(51) Int Cl.⁷: **C08J 5/18**
// C08L67:02

(21) Application number: **00101814.2**

(22) Date of filing: **28.01.2000**

(54) **Heat shrinkable polyester film**

Wärmeschrumpfbarer Polyesterfilm

Feuille en polyester thermorétractable

(84) Designated Contracting States:
**DE FR GB NL**

(30) Priority: **28.01.1999 JP 2083699**
**08.03.1999 JP 6089899**
**23.04.1999 JP 11733899**
**23.04.1999 JP 11733999**
**23.04.1999 JP 11734099**

(43) Date of publication of application:
**02.08.2000 Bulletin 2000/31**

(60) Divisional application:
**03015681.4 / 1 359 184**

(73) Proprietor: **Toyo Boseki Kabushiki Kaisha**
**Osaka-shi, Osaka 530-8230 (JP)**

(72) Inventors:
• **Ito, Hideki**
**Inuyama-shi, Aichi-ken, 484-8508 (JP)**
• **Hashimoto, Masatosi**
**Inuyama-shi, Aichi-ken, 484-8508 (JP)**
• **Mukouyama, Yukinobu**
**Inuyama-shi, Aichi-ken, 484-8508 (JP)**
• **Tabota, Norimi**
**Inuyama-shi, Aichi-ken, 484-8508 (JP)**
• **Oko, Tsutomu**
**Inuyama-shi, Aichi-ken, 484-8508 (JP)**

(74) Representative: **Müller-Boré & Partner**
**Patentanwälte**
**Grafinger Strasse 2**
**81671 München (DE)**

(56) References cited:
**EP-A- 0 210 646**     **EP-A- 0 267 799**
**EP-A- 0 271 928**     **EP-A- 0 826 482**
**EP-A- 0 934 813**

Remarks:
The file contains technical information submitted
after the application was filed and not included in this
specification

**Description**

The present invention relates to a heat shrinkable polyester film for use in a cap sealing label for a bottle container (e.g., a milk bottle), in which a bonded portion (backlining portion) of the label (i.e., a portion of a tubular label where two opposite edges of the material film sheet are bonded together) has a high adhesive retention after shrinkage and which has very little creasage, shrinkage non-uniformity, distortion, or jumping occurring from a shrinkage process.

Heat shrinkable films made of polyvinyl chloride, polystyrene, or the like, have been widely used in the field of multi-packaging films for use in packaging a stack of cans. In recent years, heat shrinkable polyester films have been attracting public attention as more problems have been found to exist with the former materials. That is, polyvinyl chloride products generate a chlorine gas when incinerated, and it is difficult to print on polystyrene products.

However, when a stack of articles is shrink-packaged with a label of a conventional heat shrinkable polyester film, a flaw is likely to occur due to, for example, a shock applied when the article stack hits another article stack during shipping or a friction between the article stack and the outer packaging box therearound. Moreover, because such a conventional film is drawn in one direction in the production process, the film is likely to be torn for a substantial length along its main shrinkage direction, in which case the film can no longer hold articles therein, thereby detracting from the commercial value of the articles. Even a state-of-the-art multi-packaging polyvinyl chloride film, which is supposed to be flexible and tear-resistant, may be torn especially under low temperatures.

One possible way to prevent such tearing along a particular direction is to orient a film along a direction perpendicular to its main shrinkage direction as well as the main shrinkage direction. However, when the film is oriented along these two directions with a poor balance between the directions, the film may be shrunk with a poor balance between the directions, thereby resulting in a poor finish after shrinkage. Moreover, when a tube is produced from the film by using an environmentally preferred chlorine-free solvent, a sufficient solvent adhesiveness cannot be obtained.

GP-A-271 928 discloses a heat shrinkable polyester film.

In recent years, a container (e.g., a bottle) for beverage, food, etc., is provided with a so-called "cap seal" wrapped around the cap or lid of the container. The cap seal is provided not only for decorative purposes but also for purposes of preventing someone from mixing poison into the contained product. A heat shrinkable film of polyvinyl chloride, polystyrene, or the like, has been widely used in a cap sealing label, as in a general purpose label. However, as already noted above, more problems have been found to exist with these materials (polyvinyl chloride products generate a chlorine gas when incinerated, and it is difficult to print on polystyrene products). Moreover, in order to effectively recycle PET bottles, it is necessary to collect non-PET labels made of polyvinyl chloride, polystyrene, etc., separately from PET labels. Thus, there is a need for cap sealing labels made of these environmentally preferred polyester heat shrinkable films.

A cap seal may be produced as follows. First, a sheet of heat shrinkable film having a predetermined size is rolled into a tubular shape with two of its opposite edges bonded together. Then, the tubular film is cut into smaller tubular label pieces.

There are two ways as follows that are typically employed in cap sealing processes. One way is to directly place a label produced as described above around the container and shrink the label onto the container. The other way is to first shrink the label onto a metal mold to provide a "preform" product, and then further shrink the label onto the container. In either case, when the label is heat-shrunk, the bonded portion (backlining portion) of the label desirably stays bonded together. If the bonded portion falls apart, the productivity decreases substantially.

Moreover, the shape characteristics of the label after it is heat-shrunk are also important. It is undesirable that the label does not shrink enough, or the shrunk label has creasage, shrinkage non-uniformity, distortion, or jumping. Particularly when the label is used for a food container, it is in many cases undesirable for the label to get moist. Therefore, in such a case, the heat shrinkage process is typically done using hot air instead of steam. When using hot air, however, the heat efficiency is lower than that when using steam, whereby it is likely that the film does not shrink enough, or the shrunk label has creasage, shrinkage non-uniformity, distortion.

When the heat shrinkable film is used as a cap sealing label with nothing printed thereon, in many cases, the film is also required to have transparency.

The present invention provides the subject matter defined in claims 1 to 23.

According to one aspect of this invention, a heat shrinkable polyester film is provided, wherein: the film has a shrinkage of 10% to 40% along its main shrinkage direction when the film is put in hot water of 70°C for 5 sec; the film has a shrinkage of 50% or more along its main shrinkage direction when the film is put in hot water of 95° C for 5 sec; the film has a shrinkage of 10% or less along a direction perpendicular to its main shrinkage direction when the film is put in hot water of 95° C for 5 sec; and when the film is formed into a label having a bonded portion, the bonded portion of the label has an adhesive retention of 95% or more after shrinkage.

In one embodiment of the invention, the bonded portion of the label has an adhesive retention of 97% or more after shrinkage.

In one embodiment of the invention, the bonded portion of the label has an adhesive retention of 99% or more after shrinkage.

In one embodiment of the invention, the bonded portion of the label has an adhesive retention of 99.5% or more after shrinkage.

In one embodiment of the invention, the label is a tubular label formed by bonding together two of opposite edges of a rectangular sheet of the film.

In one embodiment of the invention, the bonded portion is a portion of a tubular label made of a rectangular sheet of the film where two of its opposite edges are bonded together.

In one embodiment of the invention, the film is a cap sealing heat shrinkable polyester film.

According to another aspect of this invention, there is provided a cap sealing label made of a heat shrinkable polyester film as defined above.

According to still another aspect of this invention, a heat shrinkable polyester film is provided, wherein: the film has a shrinkage of 10% to 40% along its main shrinkage direction when the film is put in hot water of 70°C for 5 sec; the film has a shrinkage of 50% or more along its main shrinkage direction when the film is put in hot water of 95° C for 5 sec; the film has a shrinkage of 10% or less along a direction perpendicular to its main shrinkage direction when the film is put in hot water of 95°C for 5 sec; the film has a film haze of 3% to 10% for a film thickness of 50 μm; and when the film is formed into a label having a bonded portion, the bonded portion of the label has an adhesive retention of 95% or more after shrinkage.

In one embodiment of the invention, the label is a tubular label formed by bonding together two of opposite edges of a rectangular sheet of the film.

In one embodiment of the invention, the bonded portion is a portion of a tubular label made of a rectangular sheet of the film where two of its opposite edges are bonded together.

In one embodiment of the invention, the film is a cap sealing heat shrinkable polyester film.

According to still another aspect of this invention, there is provided a cap sealing label made of a heat shrinkable polyester film as defined above.

According to still another aspect of this invention, there is provided a heat shrinkable polyester film, wherein: the film has a shrinkage of 10% to 40% along its main shrinkage direction when the film is put in hot water of 70°C for 5 sec; the film has a shrinkage of 50% or more along its main shrinkage direction when the film is put in hot water of 95° C for 5 sec; the film has a shrinkage of 10% or less along a direction perpendicular to its main shrinkage direction when the film is put in hot water of 95°C for 5 sec; the film has a shrinkage of 15% to 30% along its main shrinkage direction when the film is put in hot water of 80°C for 5 sec after a preform process; and when the film is formed into a label having a bonded portion, the bonded portion of the label has an adhesive retention of 95% or more after shrinkage.

In one embodiment of the invention, the label is a tubular label formed by bonding together two of opposite edges of a rectangular sheet of the film.

In one embodiment of the invention, the bonded portion is a portion of a tubular label made of a rectangular sheet of the film where two of its opposite edges are bonded together.

In one embodiment of the invention, the film is a cap sealing heat shrinkable polyester film.

According to still another aspect of this invention, there is provided a cap sealing label made of a heat shrinkable polyester film as defined above.

According to still another aspect of this invention, there a heat shrinkable polyester film is provided, wherein: the film has a shrinkage of 10% to 40% along its main shrinkage direction when the film is put in hot water of 70°C for 5 sec; the film has a shrinkage of 50% or more along its main shrinkage direction when the film is put in hot water of 95°C for 5 sec; the film has a shrinkage of 10% or less along a direction perpendicular to its main shrinkage direction when the film is put in hot water of 95°C for 5 sec; the film has a preform finish defective percentage of 1% or less; and when the film is formed into a label having a bonded portion, the bonded portion of the label has an adhesive retention of 95% or more after shrinkage.

In one embodiment of the invention, the label is a tubular label formed by bonding together two of opposite edges of a rectangular sheet of the film.

In one embodiment of the invention, the bonded portion is a portion of a tubular label made of a rectangular sheet of the film where two of its opposite edges are bonded together.

In one embodiment of the invention, the film is a cap sealing heat shrinkable polyester film.

According to still another aspect of this invention, there is provided a cap sealing label made of a heat shrinkable polyester film as defined above.

Thus, the invention described herein makes possible the advantages of: (1) providing a heat shrinkable polyester film which has a good shock resistance during shipping especially under low temperatures, with a good finish after shrinkage and a sufficient solvent adhesiveness; (2) providing a heat shrinkable polyester film having such properties for use in a multi-packaging label for packaging, inter alia, a stack of cans; and (3) providing a heat shrinkable polyester film for use in a cap sealing label for a bottle container, in which a bonded portion (backlining portion) of the label has a high adhesive retention after shrinkage and which has very little creasage, shrinkage non-uniformity, distortion, or jumping occurring from a shrinkage process.

These and other advantages of the present invention will become apparent to those skilled in the art upon reading and understanding the following detailed description with reference to the accompanying figures.

Figure 1A is a perspective view illustrating a label produced by rolling a sheet of heat shrinkable film into a tubular shape with two of its opposite edges bonded together, and then cutting the tubular film into smaller pieces;

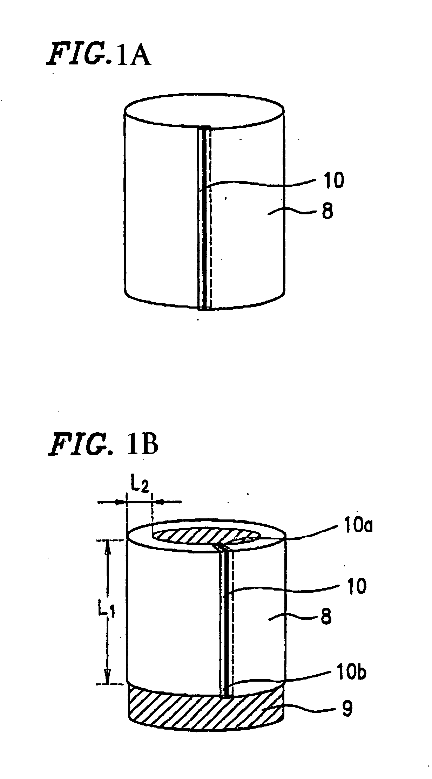

Figure 1B is a perspective view illustrating the label being placed around a metal cylinder; and

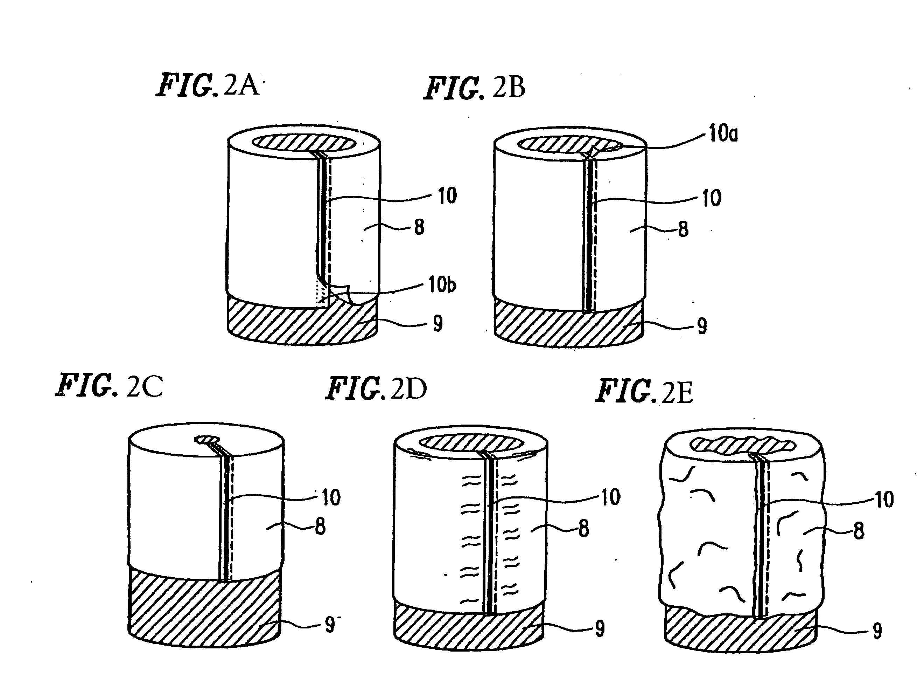

Each of Figures 2A to 2E is a perspective view illustrating the appearance of the label after shrinking (i.e., the preform finish property).

A heat shrinkable polyester film according to an embodiment of the present invention will now be described.

(Heat shrinkable polyester film suitable for use in cap sealing label)

A heat shrinkable polyester film of the present invention suitable for use in a cap sealing label is preferably produced from a polyester composition containing a polyester comprising a dicarboxylic acid component and a diol component, and a polyester elastomer. The polyester composition contains 50 wt% to 99.9 wt% of a polyester, and contains 0.1 wt% to 50 wt% of a polyester elastomer.

The heat shrinkable polyester film of the present invention can be produced by drawing the undrawn film obtained from the above-described polyester composition at a temperature equal to or greater than Tg-5°C and less than Tg+15°C (where Tg is the glass-transition temperature of the polyester) along the transverse direction (direction perpendicular to the extrusion direction) by a drawing factor of 3.0 or more, and preferably 3.5 or more.

(Polyester)

The dicarboxylic acid component of the polyester may include aromatic dicarboxylic acids (e.g., terephthalic acid, isophthalic acid, naphthalenedicarboxylic acid, and orthphthalic acid), aliphatic dicarboxylic acids (e.g., adipic acid, azelaic acid, sebacic acid, and decanedicarboxylic acids), alicyclic dicarboxylic acids, or the like.

Where the polyester contains an aliphatic dicarboxylic acid(s) (e.g., adipic acid, sebacic acid, decanedicarboxylic acid, or the like), the content of the aliphatic dicarboxylic acid is preferably less than 3 mol% (this applies to all the dicarboxylic acid components used). A heat shrinkable polyester film obtained by using a polyester which contains 3 mol% or more of such an aliphatic dicarboxylic acid(s) may not have a sufficient rigidity in high-speed processes.

The polyester preferably does not contain a polyvalent carboxylic acid whose valence is 3 or more (e.g., a trimellitic acid, a pyromellitic acid, or anhydride thereof). If the polyester contains such a polyvalent carboxylic acid, the content thereof is preferably 3 mol% or less. With a heat shrinkable polyester film obtained by using a polyester containing such a polyvalent carboxylic acid, a sufficient shrinkage may not be achieved.

A diol component of the polyester to be used in the present invention may include aliphatic diols (e.g., ethylene glycol, propane diol, butane diol, neopentyl glycol, hexane diol, or the like), alicyclic diols (e.g., 1,4-cyclohexane dimethanol), aromatic diols, or the like.

A polyester used in the heat shrinkable polyester film of the present invention is preferably a polyester whose glass-transition temperature (Tg) is adjusted to 60°C to 75°C by mixing therein one or more diols whose carbon number is 3 to 6 (e.g., propane diol, butane diol, neopentyl glycol, and hexane diol).

In order to obtain a heat shrinkable polyester film having a particularly desirable shrunk finish property, it is preferred to use neopentyl glycol as one of the diol components, preferably in an amount of 15 mol% to 25 mol% (this applies to all the diol components used).

It is preferable not to include a diol whose carbon number is 8 or more (e.g., octanediol) or a polyalcohol whose valence is 3 or more (e.g., trimethylolpropane, trimethylolethane, glycerin, and diglycerin). If such a diol or such a polyalcohol is included, the content thereof is preferably 3 mol% or less. With a heat shrinkable polyester film obtained by using a polyester containing such a diol or such a polyalcohol, a sufficient shrinkage may not be achieved.

The polyester preferably contains the least amount possible of diethylene glycol, triethylene glycol, and polyethylene glycol. Particularly, diethylene glycol is likely to be present because it is a byproduct from a polyester polymerization process. Nevertheless, in the polyester used in the present invention, the content of diethylene glycol is preferably less than 4 mol%.

When two or more polyesters are mixed together, the acid component content or the diol component content is the content with respect to the acid component or the diol component, respectively, of all the polyesters. These contents are irrespective of whether ester interchange occurs after mixing.

The above-described polyesters can be produced by any conventional method. For example, the polyester can be obtained by using, for example, a direct esterification method, where a dicarboxylic acid and a diol are directly reacted with each other, or a transesterification method, where a dimethyl dicarboxylate and a diol are reacted with each other. The polymerization may be performed either in a batch process or a continuous process.

(Polyester elastomer)

The polyester elastomer (polyester block copolymer) used in the present invention is a polyester block copolymer comprising a high melting point crystalline polyester segment (hard segment) and a low melting point soft polymer segment having a molecular weight of 400 or more (soft segment). When a high polymer is made solely of the high melting point crystalline polyester segment, the melting point is 200°C or more. The low melting point soft polymer segment itself has a melting point or a softening point of 80°C or less.

When a fiber-forming high polymer is made solely of the high melting point crystalline polyester segment (hard segment), the melting point is 200°C or more.

For example, the high melting point crystalline polyester segment may be: a polyester comprising a residue of an aromatic dicarboxylic acid (e.g., terephthalic acid, isophthalic acid, 1,5-naphthalenedicarboxylic acid, and 2,6-naphthalenedicarboxylic acid) and a residue of an aliphatic, aromatic or alicyclic diol (e.g., ethylene glycol, propylene glycol, tetramethylene glycol, pentamethylene glycol, 2,2-dimethyltrimethylene glycol, hexamethylene glycol, decamethylene glycol, p-xylene glycol, and cyclohexane dimethanol); a polyester comprising a residue of an oxy acid (e.g., p-(β-hydroxyethoxy)benzoate, and p-oxybenzoatepibarolactone); a polyether ester comprising a residue of an aromatic ether dicarboxylic acid (e.g., 1,2-bis(4,4'-dicarboxymethylphenoxy)ethane, di(4-carboxyphenoxy)ethane) and a residue of the above-described aliphatic, aromatic or alicyclic diol; or a polyamide ester comprising a residue of an aromatic amide dicarboxylic acid (e.g., bis(N-paracarboethoxyphenyl)terephthalimide) and a residue of the above-described aliphatic, aromatic or alicyclic diol.

It is also possible to use a copolymer polyester containing two or more of such dicarboxylic acid residues and/or diol residues.

The low melting point soft polymer segment having a molecular weight of 400 or more (soft segment) is a segment in a polyester block copolymer which is substantially amorphous. The segment itself has a melting point or a softening point of 80°C or less.

The molecular weight of the low melting point soft polymer segment is 400 to 8000, and preferably 700 to 5000.

The ratio of the low melting point soft polymer segment in the polyester elastomer is preferably 1 wt% to 90 wt%, and more preferably 5 wt% to 80 wt%.

Typical low melting point soft polymer segments include a polyether (e.g., polyethylene oxide glycol, polypropylene oxide glycol, polytetramethylene oxide glycol, a glycol of a copolymer of ethylene oxide and propylene oxide, and a glycol of a copolymer of ethylene oxide and tetrahydrofuran), an aliphatic polyester (e.g., polyneopentyl azelate, polyneopentyl adipate, and polyneopentyl sebacate), polylactone (e.g., poly-ε-caprolactone), and the like.

In view of the compatibility with the polyester included in the polyester film, it is particularly preferred that the polyester elastomer includes polylactone (e.g., poly-ε-caprolactone) as the soft segment. With a better compatibility between the polyester elastomer and the polyester, the film will have a better transparency and the bonded portion (backlining portion) of the label will have a better adhesion.

The polyester elastomer is contained in the polyester composition of the polyester film in an amount of 0.1 wt% to 50 wt%, preferably 0.1 wt% to 30 wt%, and more preferably 5 wt% to 30 wt%.

When the content of the polyester elastomer is less than 0.1 wt% or greater than 50 wt%, the bonded portion (backlining portion) of the label produced from the polyester film of the present invention will have a poor adhesion.

The same additives as those described above may be included to improve the smoothness of the heat shrinkable film. The inorganic lubricant may be, for example, titanium dioxide, fine particle silica, kaoline, or calcium carbonate. The organic lubricant may be, for example, long-chain fatty acid ester.

The hot water shrinkage of a heat shrinkable polyester film can be determined as follows. The film is subjected to a no-load treatment in hot water. Based on the length of the film before shrinkage and that after shrinkage, the hot water shrinkage of the film can be calculated by the expression:

$$\text{Heat shrinkage} = ((\text{length before shrinkage - length after shrinkage}) / \text{length before shrinkage}) \times 100 \ (\%)$$

The heat shrinkable polyester film of the present invention has a shrinkage of 10% to 40%, and preferably 20% to 40%, along its main shrinkage direction when the film is put in hot water of 70°C for 5 sec. The film has a shrinkage of 50% or more, and preferably 50% to 70%, along its main shrinkage direction when the film is put in hot water of 95°C for 5 sec. The film has a shrinkage of 10% or less, preferably 8% or less, and more preferably 6% or less, along a direction perpendicular to its main shrinkage direction when the film is put in hot water of 95°C for 5 sec.

For a hot water shrinkage process at 70°C for 5 sec, when the shrinkage along the main shrinkage direction is less than 10%, the low temperature shrinkage of the film may be insufficient, whereby it may be necessary to increase the shrinkage temperature, which is undesirable. When the shrinkage exceeds 40%, jumping of the label may occur from the heat shrinkage process.

The shrinkage for a hot water shrinkage process at 95°C for 5 sec is preferably 50% to 70%. When the shrinkage is less than 50%, it may be necessary to increase the shrinkage temperature, which is undesirable. When the shrinkage exceeds 70%, the label may still have a shrinking force even after the heat shrinkage process, whereby the label is likely to jump.

The heat shrinkable polyester film of the present invention has a film haze of 3% to 10% for a film thickness of 50 μm. When the haze exceeds 10%, there is a practical problem in that the printed label may have a poor color. When the haze is less than 3%, the film thickness distribution may deteriorate.

A label made of the heat shrinkable polyester film of the present invention after a preform process has a hot water shrinkage along the main shrinkage direction of 15% to 30%, and more preferably 17% to 25% for a hot water shrinkage process at 80°C for 5 sec. When the hot water shrinkage along the main shrinkage direction after the preform process is less than 15%, insufficient shrinkage may occur. When the hot water shrinkage is 30% or more, jumping of the label may occur from the heat shrinkage process.

When the label made of the heat shrinkable polyester film of the present invention is subjected to a preform process, the defect percentage is 1% or less. A decrease in the production yield is undesirable because it may necessitate a reduction in the productivity, e.g., a reduction in the process speed, in order to reduce the defect.

When the heat shrinkable polyester film of the present invention is formed into a label having a bonded portion (backlining portion), the bonded portion of the label has an adhesive retention of 97% or more, preferably 99% or more, and more preferably 99.5% or more, after shrinkage.

When the heat shrinkable polyester film of the present invention is formed into a label, the label preferably has a compressive strength of about 300 g or more, and more preferably about 400 g or more. While the compressive strength is influenced by the film thickness, the compressive strength is preferably about 300 g or more so that the film can suitably be used with a high-speed label application machine. When the compressive strength is less than 300 g, there may be a label application defective.

The thickness of the heat shrinkable polyester film of the present invention is not limited to any particular value. As a heat shrinkable film for use in a label, the thickness of the film is preferably 10 μm to 200 μm, and more preferably 20 μm to 100 μm.

A cap sealing label can be produced as described above. First, a sheet of heat shrinkable film having a predetermined size is rolled into a tubular shape with two of its opposite edges bonded together. Then, the tubular film is cut into smaller label pieces. The method of bonding is not limited to any particular method. For example, a solvent or a swelling agent is applied on at least one of two opposite edges of the heat shrinkable polyester film, the opposite edges are bonded together before the solvent or the swelling agent dries up.

A halogenated hydrocarbon solvent is particularly recommended for use in the above-described method. The halogenated hydrocarbon solvent comprises low boiling point solvents as follows. Such a low boiling point solvent comprises an aliphatic and aromatic halogenated hydrocarbon, and has a boiling point of 200°C or less and a vapor pressure of 5 mmHg or more at 20°C. Particularly, in view of the high-speed process, the solvent preferably has a boiling point of 150°C or less and a vapor pressure of 30 mmHg or more at 20°C.

Specific examples of the solvent include a halogenated aliphatic hydrocarbon (e.g., dichloromethane, chloroform, dichloroacetylene, dichloroethylidene, dichloroethylene, 1,1,1-trichloroethane, 1,1,2-trichloroethane, 1,1,2,2-tetrachloroethane, trichloroethylene, and dipropylene chloride), a halogenated aromatic hydrocarbon (e.g., ortho-dichlorobenzene), and the like. It is understood that the solvent used in the present invention is not limited to those listed above. Any solvent may advantageously be used in the present invention as long as it can dissolve the polyester composition of the present invention and has a boiling point and a vapor pressure as described above. Applicable solvents other than a halogenated hydrocarbon solvent include, for example, aromatic hydrocarbons (e.g., benzene, toluene, xylene, and trimethylbenzene), phenols (e.g., phenol, and metacresol), alcohols (e.g., benzyl alcohol), nitro hydrocarbons (e.g., a nitrobenzene), nitryl (e.g., acetonitrile), nitride compounds such as amines (e.g., normal butylamine, pyridine, and morpholine), ketones (e.g., acetone, methyl ethyl ketone, methyl isobutyl ketone, and methylcyclohexane), a glycol ether (e.g., dioxane), an ether such as furans (e.g., tetrahydrofuran), an ester (e.g., ethyl acetate, normal butyl acetate, and monoethyl acetate), an organic acid (e.g., a formic acid, an acetic acid, and fluoroacetic acid), an inorganic acid (e.g., a sulfuric acid, and a nitric acid), a sulfur derivative (e.g., carbon disulfide), N,N-dimethylformamide, and the like. Particularly, those with a high volatility are preferred. Among ether solvents, a particularly useful solvent is dioxane.

The solvent or swelling agent preferably has a solubility index in a range of 8.0 to 13.8. However, the solubility index is not limited to this range. From a different point of view, the solvent or swelling agent preferably is such that when the polyester film having a size of 5 cm×1 cm×40 μm is immersed in the solvent or swelling agent at 23°C for 10 sec, the degree of swelling (as defined below) is 1% or more. However, again, the degree of swelling is not limited to this.

$$\text{Degree of swelling} = ((A\text{-}B)/B) \times 100\ (\%),$$

where

    A: the thickness of the film after immersion
    B: the thickness of the film before immersion

The above-listed solvents or swellings agent are merely examples, and the present invention is not limited to those shown above. Moreover, the solvents or swelling agents may be used alone or in combination.

Next, a specific example of the method for producing a heat shrinkable polyester film of the present invention will be described, though the present invention is not limited to such a method.

An undrawn film can be obtained by the same method as that described above. The extrusion process may be done with any known method such as a T-die method, or a tubular method.

The obtained undrawn film is then drawn at a temperature equal to or greater than Tg-5°C and less than Tg+15°C (where Tg is the glass-transition temperature of the polyester) along the transverse direction (direction perpendicular to the extrusion direction) by a drawing factor of 3.0 or more, and preferably 3.5 or more.

Then, a heat treatment is optionally performed at 70°C to 100°C to obtain the heat shrinkable polyester film.

The film may be drawn with a tenter only in the transverse direction, or in two directions, i.e., in the transverse direction and additionally in the longitudinal direction. Such a biaxial drawing may be performed either with a successive biaxial drawing method or a simultaneous biaxial drawing method. After this drawing process, the film may optionally be further drawn in the longitudinal or transverse direction.

In order to achieve the objects of the present invention, it is more practical to have the main shrinkage direction along the transverse direction. Therefore, an exemplary film production method where the main shrinkage direction is along the transverse direction has been described above. However, it is understood that the main shrinkage direction may alternatively be along the longitudinal direction, in which case the above-described method can be used only with the drawn direction being rotated by 90 degrees.

In the present invention, an undrawn film obtained from a polyester is preferably drawn at a temperature of equal to or greater than Tg-5°C and less than Tg+15°C.

It is not preferable to draw the film at a temperature less than Tg-5°C. In such a case, a sufficient heat shrinkage, a feature of the present invention, may not be obtained, and further the transparency of the obtained film may deteriorate.

It is also not preferable to draw the film at a temperature of Tg+15°C or more. In such a case, the film may not have a sufficient rigidity in high-speed processes, and further the film may have a substantially increased thickness variation.

The heat shrinkable polyester film of the present invention preferably has a film thickness distribution of 6% or less, and more preferably 5% or less. The film thickness distribution can be calculated based on the following expression: Thickness variation = ((maximum thickness - minimum thickness) / average thickness) × 100 (%).

A three-color printing test is performed to evaluate the shrunk finish property of the film. With a film having a thickness distribution of 6% or less, it is easy to superimpose the colors on one another. However, with a film having a thickness distribution greater than 6%, the colors may not be desirably superimposed on one another.

In order to reduce the thickness distribution of a heat shrinkable polyester film, it is preferred to heat the film to a predetermined temperature with hot air at a low flow rate such that the heat transfer coefficient is 0.0013 cal/cm$^2$·sec·°C or less in a pre-heat process, which is performed before the drawing process for drawing the film with a tenter in the transverse direction.

In order to suppress generation of heat inside the film associated with the drawing process and thus to reduce the film temperature non-uniformity in the width direction, the heat transfer coefficient in the drawing process should be 0.0009 cal/cm$^2$·sec·°C or more, and preferably 0.0011 to 0.0017 cal/cm$^2$·sec·°C.

When the heat transfer coefficient in the pre-heat process exceeds 0.0013 cal/cm$^2$·sec·°C or when that in the drawing process is 0.0009 cal/cm$^2$·sec·°C or less, the thickness is likely to be non-uniform. In such a case, when a multi-color printing is performed on the obtained film, the colors of a printed pattern may not be properly superimposed on one another.

The present invention will now be described in greater detail by way of examples. However, the present invention is not limited to these examples, but other examples may be possible without departing from the scope of the present invention.

The evaluation methods used in the present invention will now be described with reference to Table 1 below.

(1) Heat shrinkage

A sheet of film was cut into 10 cm×10 cm pieces, and subjected to a no-load treatment in hot water at a temperature ±0.5°C of a predetermined temperature so as to heat-shrink the film. Then, the longitudinal and transverse dimensions of the film were measured so as to obtain the heat shrinkage of the film according to the following expression (Expression 1). The direction along which the heat shrinkage was greater was assumed to be the main shrinkage direction of the film.

(Expression 1)

Heat shrinkage = {(length before shrinkage - length

after shrinkage) / length before shrinkage} $\times$ 100 (%)

(2) Refractive index

An Abbe refractometer was used to measure the refractive index of the film along the longitudinal, transverse and thickness directions of the film.

The refractive index of the film along the longitudinal direction (main shrinkage direction) is denoted by Nx, and the refractive index along the transverse direction (direction perpendicular to the main shrinkage direction) is denoted by Ny.

(3) Solvent adhesiveness

The film was rolled into a tubular shape with two of its opposite edges bonded together with 1,3-dioxolane. The tubular film was cut into smaller pieces (samples) each having a width of 15 mm in a transverse direction which is perpendicular to the direction along which the film runs through the processing system. The bonded portion was pulled along the transverse direction and peeled apart. "○" indicates a sample which had a sufficient peel resistance.

(4) Shrunk finish property

Each sample was placed around commercially available food container cans ("Friskie" manufactured by Friskie) and passed through Universal Shrinker (Model: K2000) manufactured by Kyowa Denki for a shrinker passage time of 15 sec (zone 1 temperature/zone 2 temperature)=(170°C/170°C) to shrink the sample onto the cans. The finish property of each shrunk sample was evaluated as follows (10 samples were evaluated). After the evaluation, each sample was marked as follows.

○:    No apparent defeat observed
×:    Crease or insufficient shrinkage observed

(7) Adhesive retention of bonded portion (backlining portion)

A heat shrinkable polyester film was passed through a tube production apparatus, where 1,3-dioxolane was applied over a width of 2 mm on one side of the film at one edge. Immediately, the film was rolled into a tubular film and the edge was bonded onto the opposite edge. The tubular film was cut into smaller pieces to obtain a label 8 having a diameter of 87 mm and a length of 53 mm as shown in Figure 1A. As shown in Figure 1B, the label 8 was placed around a metal cylinder 9 having a diameter of 46 mm, and the label 8 was heat-shrunk onto the metal cylinder 9 through a process at a temperature of 200°C for 2 sec. Then, the condition and the strength of a bonded portion 10 were evaluated (a total of 200 (1000) samples were evaluated). In Figure 1B, the length $L_1$ was 47 mm, the length $L_2$ was 6 mm, and the width of the bonded portion 10 was 5 mm. The evaluation was done by visual observation with the criteria shown below. The following expression (Expression 2) was used to obtain the adhesive retention of the bonded

portion (backlining portion).

(Expression 2)

Adhesive retention of the bonded portion

(backlining portion) = ((number of samples evaluated -

number of defectives) / number of samples evaluated) $\times$ 100 (%)

(Criteria)

A sample was considered defective if, after shrinkage, peeling had occurred in an upper portion 10a, in a lower portion 10b, or generally along the entire length of the bonded portion 10. A sample was also considered defective if, after shrinkage, the upper portion 10a and/or the lower portion 10b could be easily peeled by hand. Otherwise, the sample was considered non-defective.
Figure 2A shows a case where peeling occurred in the lower portion 10b of the label 8. Figure 2B shows a case where peeling occurred in the upper portion 10a of the label 8.

(8) Preform finish property and defect percentage

For each of the shrunk labels evaluated as described in section (7) above, the shrink property and the finish property of the entire label including the bonded portion were evaluated (a total of 200 (1000) samples were evaluated). The evaluation was conducted by visual observation with the criteria shown below. Then, the preform finish defect percentage (total number of samples evaluated = 1000) was obtained by the following expression.
Preform finish defect percentage = (number of defectives / number of samples evaluated) $\times$ 100 (%)
After the evaluation, each sample was marked as follows.

$\bigcirc$: No crease, no jumping, or no insufficient shrinkage observed
$\times$: Crease, jumping, or insufficient shrinkage observed

Figure 2C shows a case where jumping occurred in the sample. Figure 2D shows a case where crease occurred in the sample. Figure 2E shows a case where insufficient shrinkage occurred in the sample.

(9) Shrinkage after preform process

For each of the shrunk labels evaluated as described in section (7) above, the bonded portion (backlining portion) 10 was out off from the label 8, and the remainder was cut into pieces each having a size of 100 mm along the main shrinkage direction by 40 mm along the direction perpendicular to the main shrinkage direction. The label pieces were further heat-shrunk through a no-load treatment in hot water at a temperature of 80±0.5°C for 5 sec. Then, the length of each label piece along the main shrinkage direction and that along the perpendicular direction were measured. The shrinkage after a preform process was obtained by the following expression (Expression 3).

(Expression 3)

Shrinkage after preform = ((length before shrinkage

- length after shrinkage) / length before shrinkage) $\times$ 100 (%)

(10) Tg (glass-transition temperature)

DSC (model: DSC220) manufactured by Seiko Instruments & Electronics Ltd was used to raise the temperature of an undrawn film (10 mg) from -40°C to 120°C at a temperature rising rate of 20°C/min to obtain an endothermic curve. The glass-transition temperature of the film was obtained based on the obtained endothermic curve. A tangential line was drawn immediately before and after an inflection point along the endothermio curve to obtain Tg (glass-transition temperature) at the intersection between the tangential lines.

(11) Film haze

"1001DP" manufactured by Nihon Denshoku Kogyo was used to measure the haze of each film sample in compliance with JIS (Japanese Industrial Standards) K 7105.

The following polyesters (Polyesters A-E) were used in the examples and comparative examples to be described below.

Polyester A: polyethylene terephthalate (intrinsic viscosity (IV): 0.75 dl/g)
Polyester B: a polyester comprising 100 mol% of terephthalic acid, 70 mol% of ethylene glycol, and 30 mol% of neopentyl glycol (IV: 0.72 dl/g)
Polyester C: polybutylene terephthalate (IV: 1.20 dl/g)
Polyester D: a polyester comprising 100 mol% of terephthalic acid, 85 mol% of butanediol, and 15 mol% of polytetramethylene glycol (molecular weight: 1000) (IV: 1.50 dl/g)
Polyester E: a polyester elastomer comprising a copolymer polyester of 70 wt% of Polyester C and 30 wt% of $\varepsilon$-caprolactone (reduced viscosity ($\eta^{sp/o}$): 1.30 dl/g)

(Example 1)

A polyester composition obtained by mixing together 36 wt% of Polyester A, 49 wt% of Polyester B and 15 wt% of Polyester E, as shown in Table 1, was melted and extruded through a T die at a temperature of 280°C, and rapidly cooled down by using a chill roll to obtain an undrawn film.

The undrawn film was pre-heated until the film temperature reached 80°C, after which the film was drawn with a tenter at a temperature of 65°C in the transverse direction by a drawing factor of 4.0 to obtain a heat shrinkable polyester film having a thickness of 50 $\mu$m.

(Example 2)

A polyester composition obtained by mixing together 36 wt% of Polyester A, 49 wt% of Polyester B and 15 wt% of Polyester E, as shown in Table 1, was melted and extruded through a T die at a temperature of 280°C, and rapidly cooled down by using a chill roll to obtain an undrawn film.

The undrawn film was pre-heated until the film temperature reached 80°C, after which the film was drawn with a tenter at a temperature of 70°C in the transverse direction by a drawing factor of 4.0 to obtain a heat shrinkable polyester film having a thickness of 50 $\mu$m.

(Example 3)

A polyester composition obtained by mixing together 26 wt% of Polyester A, 54 wt% of Polyester B and 20 wt% of Polyester E, as shown in Table 1, was melted and extruded through a T die at a temperature of 280°C, and rapidly cooled down by using a chill roll to obtain an undrawn film.

The undrawn film was pre-heated until the film temperature reached 80°C, after which the film was drawn with a tenter at a temperature of 65°C in the transverse direction by a drawing factor of 4.0 to obtain a heat shrinkable polyester film having a thickness of 50 $\mu$m.

(Example 4)

A polyester composition obtained by mixing together 26 wt% of Polyester A, 54 wt% of Polyester B and 20 wt% of Polyester E, as shown in Table 1, was melted and extruded through a T die at a temperature of 280°C, and rapidly cooled down by using a chill roll to obtain an undrawn film.

The undrawn film was pre-heated until the film temperature reached 80°C, after which the film was drawn with a tenter at a temperature of 70°C in the transverse direction by a drawing factor of 4.0 to obtain a heat shrinkable polyester film having a thickness of 50 $\mu$m.

(Comparative Example 1)

A polyester composition obtained by mixing together 26 wt% of Polyester A, 45 wt% of Polyester B, 24 wt% of Polyester C, and 5 wt% of Polyester D, as shown in Table 1, was melted and extruded through a T die at a temperature of 280°C, and rapidly cooled down by using a chill roll to obtain an undrawn film.

The undrawn film was pre-heated until the film temperature reached 80°C, after which the film was drawn with a tenter at a temperature of 68°C in the transverse direction by a drawing factor of 4.0 to obtain a heat shrinkable polyester film having a thickness of 50 μm.

(Comparative Example 2)

A polyester composition obtained by mixing together 26 wt% of Polyester A, 50 wt% of Polyester B and 24 wt% of Polyester C, as shown in Table 1, was melted and extruded through a T die at a temperature of 280°C, and rapidly cooled down by using a chill roll to obtain an undrawn film.
The undrawn film was pre-heated until the film temperature reached 80°C, after which the film was drawn with a tenter at a temperature of 65°C in the transverse direction by a drawing factor of 4.0 to obtain a heat shrinkable polyester film having a thickness of 50 μm.

(Comparative Example 3)

A polyester composition obtained by mixing together 7 wt% of Polyester A, 68 wt% of Polyester B and 25 wt% of Polyester C, as shown in Table 1, was melted and extruded through a T die at a temperature of 280°C, and rapidly cooled down by using a chill roll to obtain an undrawn film.
The undrawn film was pre-heated until the film temperature reached 80°C, after which the film was drawn with a tenter at a temperature of 75°C in the transverse direction by a drawing factor of 4.0 to obtain a heat shrinkable polyester film having a thickness of 50 μm.
The evaluation results for the respective films of Examples 1-4 and Comparative Examples 1-3 are shown together in Table 1.

## Table 1

| | Material | | | | | Film production condition | | Shrinkage (5 sec) | | Adhesive retention (%) of backlining portion | Preform finish property | Preform finish defective percentage (%) | Shrinkage after preform (%) | Film haze (%) |
|---|---|---|---|---|---|---|---|---|---|---|---|---|---|---|
| | Polyester A | Polyester B | Polyester C | Polyester D | Polyester E | Drawing temperature | Drawing factor | 70 ℃ | 95 ℃ | | | | | |
| Example 1 | 36 | 49 | 0 | 0 | 15 | 65 | 4.0 | 30.0 | 68.0 | 95.0 | ○ | 0.5 | 20.0 | 8 |
| Example 2 | 36 | 49 | 0 | 0 | 15 | 70 | 4.0 | 23.0 | 63.0 | 97.0 | ○ | 1.0 | 16.0 | 7 |
| Example 3 | 26 | 54 | 0 | 0 | 20 | 65 | 4.0 | 35.0 | 67.0 | 99.0 | ○ | 0.5 | 22.0 | 5 |
| Example 4 | 26 | 54 | 0 | 0 | 20 | 70 | 4.0 | 27.0 | 61.0 | 99.5 | ○ | 1.0 | 18.0 | 4 |
| Comparative example 1 | 26 | 45 | 24 | 5 | 0 | 68 | 4.0 | 30.0 | 65.0 | 90.0 | ○ | — | 20.0 | 13 |
| Comparative example 2 | 26 | 50 | 24 | 0 | 0 | 65 | 4.0 | 35.0 | 74.0 | 95.0 | ✕ | 2.0 | 31.0 | 7 |
| Comparative example 3 | 7 | 68 | 25 | 0 | 0 | 75 | 4.0 | 21.0 | 68.0 | 99.0 | ✕ | 5.0 | 33.0 | 5 |

EP 1 024 162 B1

**EP 1 024 162 B1**

As is apparent from Table 1, for each of the films obtained in Examples 1-4, the bonded portion (backlining portion) of the label produced from the film exhibited a high adhesive retention. Each of the films also exhibited a good shrunk finish property. The films obtained in Examples 1-4 exhibited a low film haze and a good transparency. Moreover, the films obtained in Examples 1-4 exhibited a hot water shrinkage after a preform process of 15% to 30% along the main shrinkage direction for a hot water process at 80°C for 5 sec. The labels of Examples 1-4 also exhibited a good shrunk finish property.

The heat shrinkable polyester film of the present invention has a high quality and a high practicability, and is particularly suitable as a cap sealing label.

On the contrary, for each of the heat shrinkable films obtained in Comparative Examples 1-3, the bonded portion (backlining portion) of the label produced from the film exhibited a poor adhesive retention. Moreover, the film obtained in Comparative Example 1 exhibited a high film haze and thus a poor transparency. Moreover, each of the films obtained in Comparative Examples 2 and 3 exhibited a high hot water shrinkage after a preform process, and a poor shrunk finish property. Thus, each of the heat shrinkable polyester films obtained in Comparative Examples 1-3 had a poor quality and a low practicability.

Thus, the heat shrinkable polyester film of the present invention has a good shock resistance during shipping especially under low temperatures, with a good finish after shrinkage and a sufficient solvent adhesiveness.

Therefore, the heat shrinkable polyester film of the present invention is suitable for use in a multi-packaging label for packaging, inter alia, a stack of cans.

The present invention also provides a heat shrinkable polyester film suitable for use in a label, especially, a cap sealing label for a bottle container, or the like.

When the heat shrinkable polyester film of the present invention is used as a cap sealing label, the bonded portion (backlining portion) of the label has a high adhesive retention after shrinkage and has very little crease, shrinkage non-uniformity, distortion, or jumping occurring from a shrinkage process. Thus, the heat shrinkable polyester film of the present invention is very useful as a cap sealing label.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. A heat shrinkable polyester film produced from a polyester composition containing 50 wt% to 99.9 wt% of a polyester and 0.1 wt% to 50 wt% of a polyester elastomer, wherein:

   the film has a shrinkage of 10% to 40% along its main shrinkage direction when the film is put in hot water of 70°C for 5 sec,
   the film has a shrinkage of 50% or more along its main shrinkage direction when the film is put in hot water of 95°C for 5 sec,
   the film has a shrinkage of 10% or less along a direction perpendicular to its main shrinkage direction when the film is put in hot water of 95°C for 5 sec, and
   when the film is formed into a label having a bonded portion, the bonded portion of the label has an adhesive retention of 95% or more after shrinkage.

2. The heat shrinkable polyester film according to claim 1, wherein the bonded portion of the label has an adhesive retention of 97% or more after shrinkage.

3. The heat shrinkable polyester film according to claim 1, wherein the bonded portion of the label has an adhesive retention of 99% or more after shrinkage.

4. The heat shrinkable polyester film according to claim 1, wherein the bonded portion of the label has an adhesive retention of 99.5% or more after

5. The heat shrinkable polyester film according to any one of claims 1 to 4, wherein the label is a tubular label formed by bonding together two of opposite edges of a rectangular sheet of the film.

6. The heat shrinkable polyester film according to any one of claims 1 to 4, wherein the bonded portion is a portion of a tubular label made of a rectangular sheet of the film where two of its opposite edges are bonded together.

13

7. The heat shrinkable polyester film according to any one of claims 1 to 6, wherein the film is a cap sealing heat shrinkable polyester film.

8. A cap sealing label made of a heat shrinkable polyester film according to any one of claims 1 to 6.

9. The heat shrinkable polyester film according to claim 1, wherein the film has a film haze of 3% to 10% for a film thickness of 50 µm.

10. The heat shrinkable polyester film according to claim 9, wherein the label is a tubular label formed by bonding together two of opposite edges of a rectangular sheet of the film.

11. The heat shrinkable polyester film according to claim 9, wherein the bonded portion is a portion of a tubular label made of a rectangular sheet of the film where two of its opposite edges are bonded together.

12. The heat shrinkable polyester film according to any one of claims 9 to 11, wherein the film is a cap sealing heat shrinkable polyester film.

13. A cap sealing label made of a heat shrinkable polyester film according to any one of claims 9 to 11.

14. The heat shrinkable polyester film according to claim 1, wherein the film has a shrinkage of 15% to 30% along its main shrinkage direction when the film is put in hot water of 80°C for 5 sec after a preform process.

15. The heat shrinkable polyester film according to claim 14, wherein the label is a tubular label formed by bonding together two of opposite edges of a rectangular sheet of the film.

16. The heat shrinkable polyester film according to claim 14, wherein the bonded portion is a portion of a tubular label made of a rectangular sheet of the film where two of its opposite edges are bonded together.

17. The heat shrinkable polyester film according to any one of claims 14 to 16, wherein the film is a cap sealing heat shrinkable polyester film.

18. A cap sealing label made of a heat shrinkable polyester film according to any one of claims 14 to 16.

19. The heat shrinkable polyester film according to claim 1, wherein the film has a preform finish defective percentage of 1% or less.

20. The heat shrinkable polyester film according to claim 19, wherein the label is a tubular label formed by bonding together two of opposite edges of a rectangular sheet of the film.

21. The heat shrinkable polyester film according to claim 19, wherein the bonded portion is a portion of a tubular label made of a rectangular sheet of the film where two of its opposite edges or bonded together.

22. The heat shrinkable polyester film according to any one of claims 19 to 21, wherein the film is a cap sealing heat shrinkable polyester film.

23. A cap sealing label made of a heat shrinkable polyester film according to any one of claims 19 to 21.

**Patentansprüche**

1. Wärmeschrumpfbare Polyesterfolie, hergestellt aus einer Polyesterzusammensetzung, die 50 Gew.-% bis 99,9 Gew.-% eines Polyesters und 0,1 Gew.-% bis 50 Gew.-% eines Polyesterelastomers enthält, wobei:

   die Folie eine Schrumpfung von 10% bis 40% entlang deren Hauptschrumpfungsrichtung aufweist, wenn die Folie für 5 Sekunden in heißes Wasser von 70°C getaucht wurde,
   die Folie eine Schrumpfung von 50% oder mehr entlang deren Hauptschrumpfungsrichtung aufweist, wenn die Folie für 5 Sekunden in heißes Wasser von 95°C getaucht wurde,
   die Folie eine Schrumpfung von 10% oder weniger entlang einer Richtung senkrecht zu deren Hauptschrumpfungsrichtung aufweist, wenn die Folie für 5 Sekunden in heißes Wasser von 95°C getaucht wurde, und wenn die Folie in ein Etikett mit einem Verbindungsbereich gebildet ist, weist der Verbindungsbereich des Etiketts nach Schrumpfung eine Haftretention von 95% oder mehr auf.

**2.** Wärmeschrumpfbare Polyesterfolie nach Anspruch 1, wobei der Verbindungsbereich des Etiketts nach Schrumpfung eine Haftretention von 97% oder mehr aufweist.

**3.** Wärmeschrumpfbare Polyesterfolie nach Anspruch 1, wobei der Verbindungsbereich des Etiketts nach Schrumpfung eine Haftretention von 99% oder mehr aufweist.

**4.** Wärmeschrumpfbare Polyesterfolie nach Anspruch 1, wobei der Verbindungsbereich des Etiketts nach Schrumpfung einer Haftretention von 99,5% oder mehr aufweist.

**5.** Wärmeschrumpfbare Polyesterfolie nach einem der Ansprüche 1 bis 4, wobei das Etikett ein röhrenförmiges Etikett ist, das durch Verbinden von zwei entgegengesetzten Enden eines rechteckigen Blatts der Folie gebildet ist.

**6.** Wärmeschrumpfbare Polyesterfolie nach einem der Ansprüche 1 bis 4, wobei der Verbindungsbereich ein Bereich eines röhrenförmigen Etiketts ist, das aus einem rechteckigen Blatt der Folie hergestellt ist, wobei zwei von dessen entgegengesetzten Enden verbunden sind.

**7.** Wärmeschrumpfbare Polyesterfolie nach einem der Ansprüche 1 bis 6, wobei die Folie eine Kappe-versiegelnde, wärmeschrumpfbare Polyesterfolie ist.

**8.** Kappe-versiegelndes Etikett, hergestellt aus einer wärmeschrumpfbaren Polyesterfolie nach einem der Ansprüche 1 bis 6.

**9.** Wärmeschrumpfbare Polyesterfolie nach Anspruch 1, wobei die Folie eine Folientrübung von 3% bis 10% für eine Foliendicke von 50 $\mu$m aufweist.

**10.** Wärmeschrumpfbare Polyesterfolie nach Anspruch 9, wobei das Etikett ein röhrenförmiges Etikett ist, das durch Verbinden von zwei entgegengesetzten Enden eines rechteckigen Blatts der Folie gebildet ist.

**11.** Wärmeschrumpfbare Polyesterfolie nach Anspruch 9, wobei der Verbindungsbereich ein Bereich eines röhrenförmigen Etiketts ist, das aus einem rechteckigen Blatt der Folie hergestellt ist, wobei zwei von dessen entgegengesetzten Enden verbunden sind.

**12.** Wärmeschrumpfbare Polyesterfolie nach einem der Ansprüche 9 bis 11, wobei die Folie eine Kappe-versiegelnde, wärmeschrumpfbare Polyesterfolie ist.

**13.** Kappe-versiegelndes Etikett, hergestellt aus einer wärmeschrumpfbaren Polyesterfolie nach einem der Ansprüche 9 bis 11.

**14.** Wärmeschrumpfbare Polyesterfolie nach Anspruch 1, wobei die Folie eine Schrumpfung von 15% bis 30% entlang deren Hauptschrumpfungsrichtung aufweist, wenn die Folie für 5 Sekunden in heißes Wasser von 80°C nach einem Vorformverfahren getaucht wurde.

**15.** Wärmeschrumpfbare Polyesterfolie nach Anspruch 14, wobei das Etikett ein röhrenförmiges Etikett ist, das durch Verbinden von zwei entgegengesetzten Enden eines rechteckigen Blatts der Folie gebildet ist.

**16.** Wärmeschrumpfbare Polyesterfolie nach Anspruch 14, wobei der Verbindungsbereich ein Bereich eines röhrenförmigen Etiketts ist, das aus einem rechteckigen Blatt der Folie hergestellt ist, wobei zwei von dessen entgegengesetzten Enden verbunden sind.

**17.** Wärmeschrumpfbare Polyesterfolie nach einem der Ansprüche 14 bis 16, wobei die Folie eine Kappe-versiegelnde, wärmeschrumpfbare Polyesterfolie ist.

**18.** Kappe-versiegelndes Etikett, hergestellt aus einer wärmeschrumpfbaren Polyesterfolie nach einem der Ansprüche 14 bis 16.

**19.** Wärmeschrumpfbare Polyesterfolie nach Anspruch 1, wobei die Folie einen Vorform-Finish-Fehlerprozentsatz von 1% oder weniger aufweist.

**20.** Wärmeschrumpfbare Polyesterfolie nach Anspruch 19, wobei das Etikett ein röhrenförmiges Etikett ist, das durch Verbinden von zwei entgegengesetzten Enden eines rechteckigen Blatts der Folie gebildet ist.

**21.** Wärmeschrumpfbare Polyesterfolie nach Anspruch 19, wobei der Verbindungsbereich ein Bereich eines röhrenförmigen Etiketts ist, das aus einem rechteckigen Blatt der Folie hergestellt ist, wobei zwei von dessen entgegengesetzten Enden verbunden sind.

**22.** Wärmeschrumpfbare Polyesterfolie nach einem der Ansprüche 19 bis 21, wobei die Folie eine Kappe-versiegelnde, wärmeschrumpfbare Polyesterfolie ist.

**23.** Kappe-versiegelndes Etikett, hergestellt aus einer wärmeschrumpfbaren Polyesterfolie nach einem der Ansprüche 19 bis 21.


**Revendications**

**1.** Film polyester thermorétractable produit à partir d'une composition polyester contenant de 50 % en poids à 99,9 % en poids d'un polyester et de 0,1 % en poids à 50 % en poids d'un élastomère polyester, dans lequel :

le film a un retrait de 10 % à 40 % le long de sa direction de retrait principale lorsque le film est placé dans de l'eau chaude à 70 °C pendant 5 s,
le film a un retrait de 50 % ou plus le long de sa direction de retrait principale lorsque le film est placé dans de l'eau chaude à 95 °C pendant 5 s,
le film a un retrait de 10 % ou moins le long d'une direction perpendiculaire à sa direction de retrait principale lorsque le film est placé dans de l'eau chaude à 95 °C pendant 5 s, et
lorsque le film est formé en une étiquette ayant une partie collée, la partie collée de l'étiquette a une rétention adhésive de 95 % ou plus après retrait.

**2.** Film polyester thermorétractable selon la revendication 1, dans lequel la partie collée de l'étiquette a une rétention adhésive de 97 % ou plus après retrait.

**3.** Film polyester thermorétractable selon la revendication 1, dans lequel la partie collée de l'étiquette a une rétention adhésive de 99 % ou plus après retrait.

**4.** Film polyester thermorétractable selon la revendication 1, dans lequel la partie collée de l'étiquette a une rétention adhésive de 99,5 % ou plus après retrait.

**5.** Film polyester thermorétractable selon l'une quelconque des revendications 1 à 4, dans lequel l'étiquette est une étiquette tubulaire formée en collant ensemble deux des bords opposés d'une feuille rectangulaire du film.

**6.** Film polyester thermorétractable selon l'une quelconque des revendications 1 à 4, dans lequel la partie collée est une partie d'une étiquette tubulaire constituée d'une feuille rectangulaire du film où deux de ses bords opposés sont collés ensemble.

**7.** Film polyester thermorétractable selon l'une quelconque des revendications 1 à 6, dans lequel le film est un film polyester thermorétractable d'étanchéité de bouchon.

**8.** Etiquette d'étanchéité de bouchon constituée d'un film polyester thermorétractable selon l'une quelconque des revendications 1 à 6.

**9.** Film polyester thermorétractable selon la revendication 1, dans lequel le film a un voile de film de 3 % à 10 % pour une épaisseur de film de 50 μm.

**10.** Film polyester thermorétractable selon la revendication 9, dans lequel l'étiquette est une étiquette tubulaire formée en collant ensemble deux des bords opposés d'une feuille rectangulaire du film.

**11.** Film polyester thermorétractable selon la revendication 9, dans lequel la partie collée est une partie d'une étiquette tubulaire constituée d'une feuille rectangulaire du film où deux de ses bords opposés sont collés ensemble.

**12.** Film polyester thermorétractable selon l'une quelconque des revendications 9 à 11, dans lequel le film est un film polyester thermorétractable d'étanchéité de bouchon.

**13.** Etiquette d'étanchéité de bouchon constituée d'un film polyester thermorétractable selon l'une quelconque des revendications 9 à 11.

**14.** Film polyester thermorétractable selon la revendication 1, dans lequel le film a un retrait de 15 % à 30 % le long de sa direction de retrait principale lorsque le film est placé dans de l'eau chaude à 80 °C pendant 5 s après un processus de préforme.

**15.** Film polyester thermorétractable selon la revendication 14, dans lequel l'étiquette est une étiquette tubulaire formée en collant ensemble deux des bords opposés d'une feuille rectangulaire du film.

**16.** Film polyester thermorétractable selon la revendication 14, dans lequel la partie collée est une partie d'une étiquette tubulaire constituée d'une feuille rectangulaire du film où deux de ses bords opposés sont collés ensemble.

**17.** Film polyester thermorétractable selon l'une quelconque des revendications 14 à 16, dans lequel le film est un film polyester thermorétractable d'étanchéité de bouchon.

**18.** Etiquette d'étanchéité de bouchon constituée d'un film polyester thermorétractable selon l'une quelconque des revendications 14 à 16.

**19.** Film polyester thermorétractable selon la revendication 1, dans lequel le film a un pourcentage défectueux de finition de préforme de 1 % ou moins.

**20.** Film polyester thermorétractable selon la revendication 19, dans lequel l'étiquette est une étiquette tubulaire formée en collant ensemble deux des bords opposés d'une feuille rectangulaire du film.

**21.** Film polyester thermorétractable selon la revendication 19, dans lequel la partie collée est une partie d'une étiquette tubulaire constituée d'une feuille rectangulaire du film où deux de ses bords opposés sont collés ensemble.

**22.** Film polyester thermorétractable selon l'une quelconque des revendications 19 à 21, dans lequel le film est un film polyester thermorétractable d'étanchéité de bouchon.

**23.** Etiquette d'étanchéité de bouchon constituée d'un film polyester thermorétractable selon l'une quelconque des revendications 19 à 21.

*FIG.*1A

10

8

*FIG.* 1B

L₂

10a

L₁

10

8

10b

9

FIG. 2A

FIG. 2B

FIG. 2C

FIG. 2D

FIG. 2E

EP 1 024 162 B1